# EUROPÄISCHE PATENTSCHRIFT

(11) **EP 1 172 239 B1**
(45) Veröffentlichungstag und Bekanntmachung des Hinweises auf die Patenterteilung: **14.02.2007**
(21) Anmeldenummer: 01113699.1
(22) Anmeldetag: 21.06.2001
(51) Int. Cl.: B60G 17/015, B60G 17/04, B60K 37/02

(54) **System zur manuellen Einstellung der Dämpfung eines Kraftfahrzeug-Fahrwerkes**
System for manual adjustment of the damping of a vehicle suspension
Système de réglage manuel de l'amortissement d'une suspension de véhicule

(30) Priorität: 12.07.2000 DE 10033770
(43) Veröffentlichungstag der Anmeldung: 16.01.2002
(73) Patentinhaber: Volkswagen Aktiengesellschaft, 38436 Wolfsburg (DE)
(72) Erfinder: Spichalsky, Carsten, 38165 Lehre (DE)

(56) Entgegenhaltungen:
- EP-A- 0 272 877
- EP-A- 0 274 879
- EP-A- 0 417 695
- EP-A- 1 028 011
- DE-A- 1 755 366
- DE-A- 3 817 809
- DE-A- 19 508 302
- US-A- 5 021 771
- US-A- 5 513 107
- US-A- 5 590 898
- US-A- 6 000 703

## Beschreibung

Die Erfindung betrifft ein System zur manuellen Einstellung der Dämpfung eines Kraftfahrzeug-Fahrwerkes, insbesondere eines Luftfedern aufweisenden Kraftfahrzeug-Fahrwerkes.

Luftfedersysteme für Kraftfahrzeuge sind grundsätzlich bekannt. In solchen Systemen ist üblicherweise druckseitig eines Kompressors ein pneumatischer Druckspeicher vorgesehen, der vom Kompressor auf einem Ladedruck gehalten wird, welcher oberhalb der Betriebsdrücke der jeweiligen Luftfederaggregate bzw. -bälge liegt. Ferner sind auch Luftfederungssysteme für Kraftfahrzeuge bekannt, die keinen Druckspeicher aufweisen und bei denen die Luftfederaggregate bzw. -bälge bei Bedarf direkt vom Kompressor aus mit Druckluft gefüllt werden.

Mit derartigen Luftfederungssystemen ist es insbesondere möglich, die Aufhängungscharakteristik bzw. Fahrwerkseigenschaft und damit das Verhalten des gesamten Fahrzeugs im Sinne einer Steuerung oder Regelung zu beeinflussen.

Aus der deutschen Offenlegungsschrift DE 1755 366 ist eine Vorrichtung bekannt, bei der die Längslage eines Kraftfahrzeugs im Hinblick auf eine Neigung gegenüber dem Fahrbahnuntergrund korrigiert werden kann. Dazu sind zwischen dem Fahrzeugaufbau und den Achsen regelbare Luftkissen angeordnet, die über zwischengeschaltete Ventile derart mit einem Luftakkumulator verbunden sind, dass daraus Luft entnommen oder zugeführt wird, um die Lage des Fahrzeugs zu korrigieren. Die Längslage des Fahrzeugs wird über ein im Fahrzeuginnenraum angeordnetes Kontrollgerät angezeigt, welches ähnlich einer Wasserwaage ausgebildet ist und Bedienungselemente aufweist, über die das Ein- oder Auslassen von Luft aus den regelbaren Luftkissen eingeleitet werden kann.

Des Weiteren ist aus der US 5, 513, 107 ein System bekannt, mit welchem eine manuelle Einstellung der Dämpfung eines Kraftfahrzeug-Fahrwerkes möglich ist. Die Einstellung der Dämpfung kann dabei über Bedienelemente vorgenommen werden, wobei die Änderung und Einstellung der entsprechenden Dämpfung über ein Display einer multifunktionalen Anzeige- und Bedieneinrichtung erfolgt. Die Einstellung der Dämpfung kann dabei lediglich stufenweise erfolgen und es werden lediglich drei unterschiedliche Dämpfungsmodi zur Einstellung bereitgestellt.

Aus der DE 195 08 302 A1 ist ein System zur aktiven oder semiaktiven Fahrwerksregelung für Kraftfahrzeuge bekannt, bei dem die Regelung der Fahrwerkseigenschaften in Abhängigkeit von fahreradaptiven Parametern vorgenommen wird. Dabei ist vorgesehen, dass mindestens eine Fahrwerkseigenschaft kontinuierlich oder zumindest quasi-kontinuierlich, z.B. in mehreren Stufen, durch ein vom Fahrer manuell einstellbares Vorgabesignal als fahreradaptiver Parameter änderbar ist. Als Beispiel für die Änderung einer Fahrwerkseigenschaft ist die Änderung einer Dämpferkennung angegeben, die dem Fahrwerk beispielsweise einen harten sportlichen Charakter oder einen weichen komfortablen Charakter aufprägt.

Bei diesem bekannten System kann grundsätzlich eine automatische Regelung der Fahrwerkseigenschaften kontinuierlich in Abhängigkeit von verschiedenen Parametern, insbesondere in Abhängigkeit der Fahrzeuggeschwindigkeit, vorgenommen werden. Die automatische und kontinuierliche Regelung der Fahrwerkseigenschaften wird dabei vorzugsweise in Form einer Grundeinstellung vorgegeben und entsprechend dem vom Fahrer manuell einstellbaren Vorgabesignal an den Fahrerwunsch angepaßt. Zur Einstellung des Vorgabesignals wird ein im Kraftfahrzeug ohnehin vorhandenes Betätigungselement vorzugsweise ein Drehschalter oder Tippschalter verwendet.

Aufgabe der vorliegenden Erfindung ist es, ein System der eingangs genannten Art anzugeben, das eine individuelle Einstellung der Fahrwerksdämpfung und eine variable Ausbildung für verschiedene Fahrzeugtypen ermöglicht und den Fahrer auf schnelle und übersichtliche Weise über die jeweilige Einstellung informiert.

Diese Aufgabe wird erfindungsgemäß durch ein System mit den Merkmalen des Anspruchs 1 gelöst. Vorteilhafte Ausgestaltungen der erfindungsgemäßen Lösung sind in den Unteransprüchen angegeben.

Erfindungsgemäß ist eine multifunktionale Anzeige- und Bedieneinrichtung mit einem Displayfeld zur Anzeige von Informationen mindestens einer auszuwählenden und/oder einer ausgewählten Menü- und/oder Funktionszuweisung und Bedienelementen zur Menü- und/oder Funktionsauswahl vorgesehen, wobei mit mindestens einem der Bedienelemente die Dämpfung des Fahrwerkes auf vier unterschiedliche Dämpfungsmodi einstellbar ist und der jeweilige Dämpfungsmodus auf dem Displayfeld angezeigt wird oder anzeigbar ist. Die Einstellung der Dämpfung erfolgt dabei zumindest zwischen zwei vorgebbaren Dämpfungsmodi stufenlos.

Eine andere bevorzugte Ausgestaltung der Erfindung besteht darin, dass die Dämpfereinstellung mittels einer Skala und/oder einer piktogrammartigen Darstellung auf dem Displayfeld angezeigt wird oder anzeigbar ist. Für eine schnelle Erfassung der dargestellten Dämpfereinstellung durch den Fahrer bzw. den Betrachter des Displayfeldes ist es günstig, wenn eine Standardeinstellung durch ein optisch hervorgehobenes, beispielsweise abgetöntes Skalensegment auf dem Displayfeld markiert ist.

Eine bevorzugte Weiterbildung der Erfindung besteht darin, dass mittels der multifunktionalen Anzeige- und Bedieneinrichtung außer der Dämpfung weitere Fahrwerkseigenschafen manuell einstellbar sind. So kann insbesondere vorgesehen sein, dass mittels der multifunktionalen Anzeige- und Bedieneinrichtung der Abstand zwischen Karosserie und Fahrbahn und/oder der Reifendruck einstellbar ist und die jeweilige Einstellung auf dem Displayfeld angezeigt wird oder anzeigbar ist.

Nachfolgend wird die Erfindung anhand einer mehrere Ausführungsbeispiele darstellenden Zeichnung näher erläutert. Im einzelnen zeigen:
- Figur 1: eine multifunktionale Anzeige- und Bedieneinrichtung eines erfindungsgemäßen Systems zur manuellen Einstellung der Dämpfung eines Kraftfahrzeug-Fahrwerkes,
- Fig. 2 und 3: das Displayfeld der Anzeige- und Bedieneinrichtung gemäß Fig. 1, wobei auf dem Displayfeld jeweils ein bestimmter Dämpfungsmodus angezeigt ist,
- Fig. 4 und 5: das Displayfeld der Anzeige- und Bedieneinrichtung gemäß Fig. 1, wobei auf dem Displayfeld eine Niveaueinstellung der Karosserie gegenüber der Fahrbahn angezeigt ist und
- Fig. 6 bis 9: das Displayfeld der Anzeige- und Bedieneinrichtung gemäß Fig. 1, wobei auf dem Displayfeld das Grundmenü einer Reifendruckeinstellung, das Menü für die Einstellung von Reifendrucksollwerten, das Menü für die Übernahme aktueller Reifendruckwerte als Sollwerte bzw. eine Sicherheitsabfrage angezeigt ist.

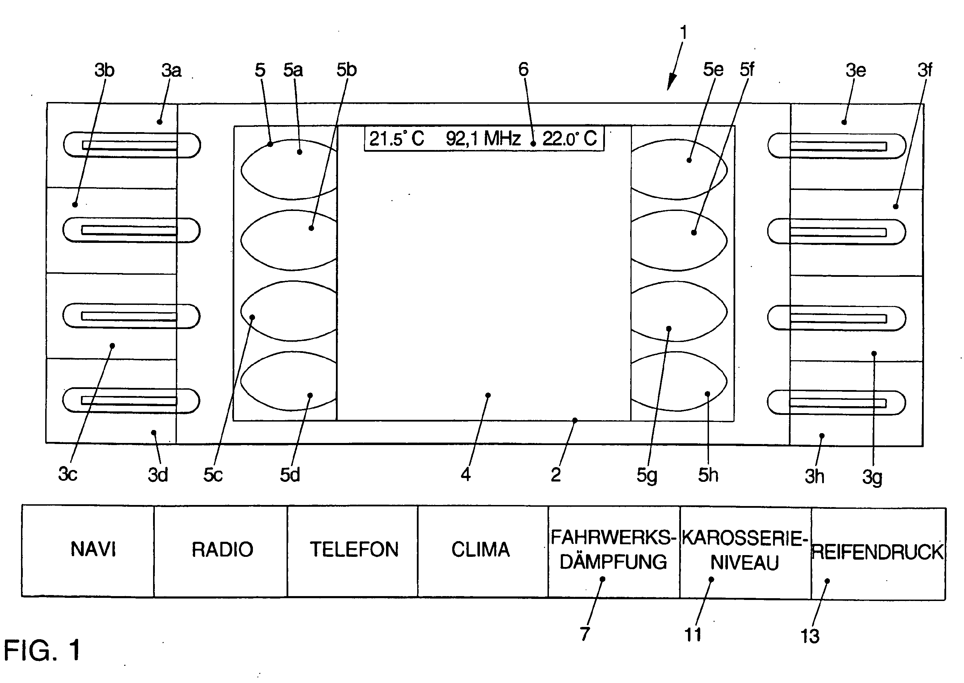

Fig. 1 zeigt eine multifunktionale Anzeige- und Bedieneinrichtung 1 eines erfindungsgemäßen Systems zur manuellen Einstellung der Dämpfung eines Kraftfahrzeug-Fahrwerkes. Die Anzeige- und Bedieneinrichtung 1 weist ein Displayfeld 2 auf, an dessen linkem sowie rechtem Rand Bedienungselemente 3 angeordnet sind, die vorzugsweise als Bedientaster ausgebildet sind. Im Displayfeld 2 ist mittig je nach aktuell ausgewählter Menü- und/oder Funktionszuweisung der Anzeige- und Bedieneinrichtung 1 ein Informations-Panel 4 dargestellt, das kleiner als das gesamte Displayfeld 2 ist. In den verbleibenden Bereichen des Displayfeldes 2 sind Funktions- und/oder Statusanzeigen 5 generiert bzw. angezeigt, die in räumlicher Zuweisung zu den Bedienelementen 3 stehen.

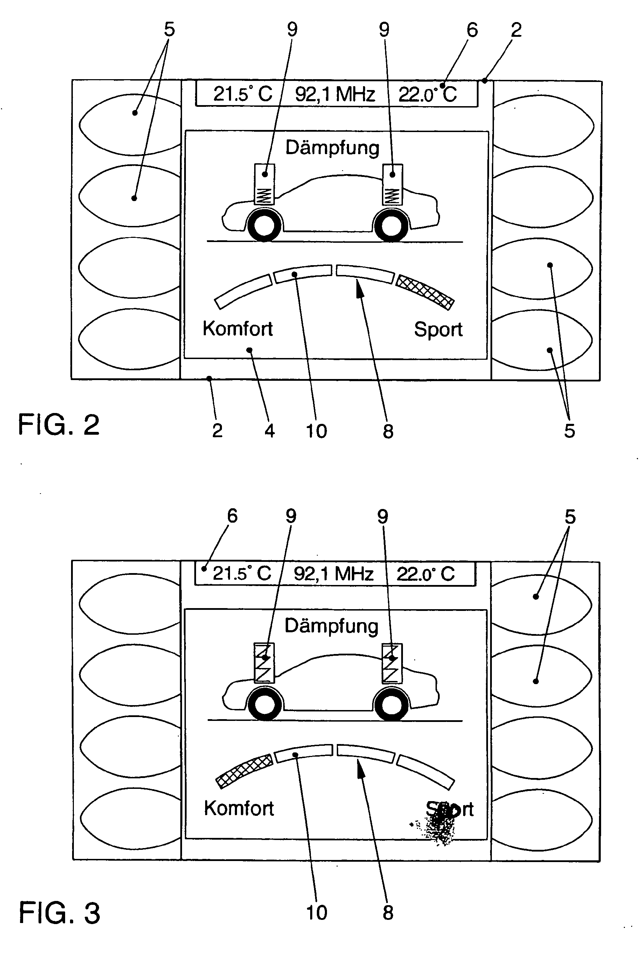

Das Informations-Panel 4 weist zusätzlich ein Informationsfeld 6 auf, in dem Informationen anderer Menüs bzw. Geräte angezeigt werden. So sind hier die Frequenz eines eingestellten Senders eines Radiogerätes sowie die eingestellten Innenraumtemperaturen eines Klimagerätes angegeben. Möchte der Benutzer nun beispielsweise aus einem bestimmten Menü heraus eine manuelle Einstellung der Dämpfung des Fahrwerkes vornehmen, betätigt er ein fest zugeordnetes Bedienelement 7 für die Dämpfungseinstellung. Auf der Anzeige- und Bedieneinrichtung 1 erscheint dann das in Fig. 2 bzw. Fig. 3 gezeigte Menü für die Dämpfungseinstellung, wobei den Bedienelementen 3 jetzt Funktionen dieser Einstellung über das Displayfeld 2, insbesondere über die Funktions- und/oder Statusanzeigen 5 zugeordnet sind.

Das Informations-Panel 4 macht mit seiner piktogrammartig unterstützten Darstellung und der Überschrift "Dämpfung" sowie den einer Skala 8 zugeordneten Bezeichnungen "Komfort" und "Sport" dem Fahrzeugführer deutlich, daß er die Dämpfung des Fahrwerkes manuell einstellen kann. In dem dargestellten Ausführungsbeispiel sind vier Einstellungen bzw. Dämpfungsmodi möglich, nämlich eine weiche, komfortable Dämpfung, eine einer Standardeinstellung entsprechende normale Dämpfung, eine mittelharte, sportliche Dämpfung und eine extraharte, brutal sportliche Dämpfung.

Der jeweils eingestellte Dämpfungsmodus wird auf dem Informations-Panel 4 des Displayfeldes 2 durch Farb-, Helligkeits- und/oder Kontrastanhebung eines zugeordneten Skalensegments sowie durch unterschiedlich gespannte, piktogrammartig dargestellte Dämpfungsfedem 9 angezeigt. Fig. 2 zeigt die Anzeige bei Einstellung des brutal sportlichen, extrem harten Dämpfungsmodus. Demgegenüber zeigt Fig. 3 die Anzeige, die sich bei Einstellung des komfortablen, weichen Dämpfungsmodus ergibt. Die Standardeinstellung, die einem normalen Dämpfungsmodus entspricht, ist jeweils durch ein abgetöntes Skalensegment 10 markiert.

Die Dämpfung ist zumindest zwischen zwei unmittelbar nebeneinanderliegenden Dämpfungsmodi stufenlos einstellbar. So kann beispielsweise eine stufenlose Einstellung zwischen dem harten und dem extra harten Dämpfungsmodus über ein geeignetes Bedienelement (nicht gezeigt) vorgenommen werden.

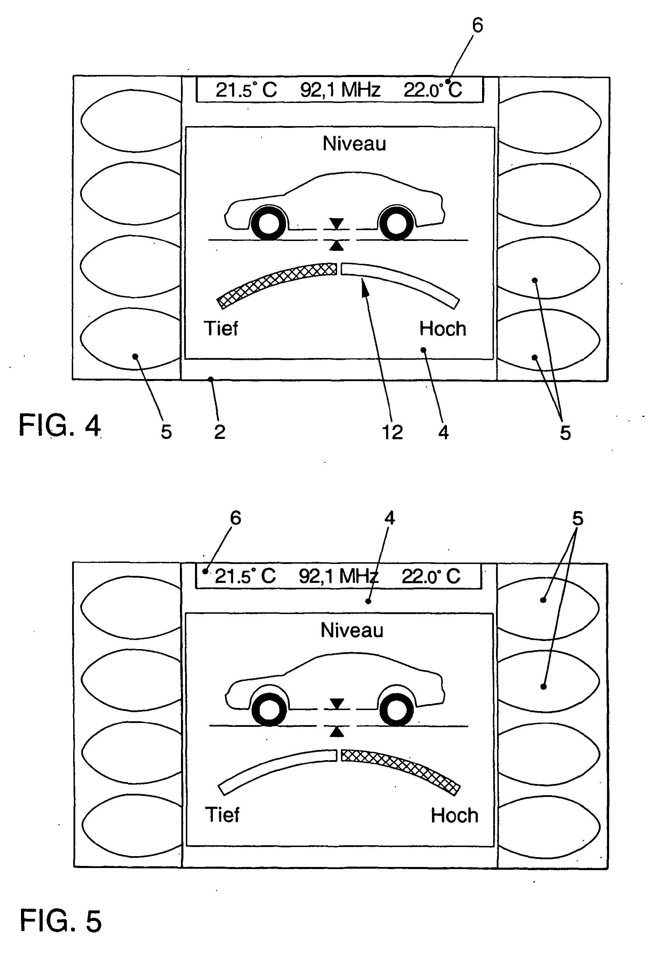

Mit dem erfindungsgemäßen System können zweckmäßigerweise auch weitere Fahrwerkseigenschaften manuell eingestellt werden. So erscheint auf dem Displayfeld 2 nach Anwahl des einer Niveaueinstellung der Karosserie fest zugewiesenen Bedienelements 11 (vgl. Fig. 1) das in Fig. 4 bzw. 5 dargestellte Menü. Durch das piktogrammartig dargestellte Fahrzeug und die Überschrift "Niveau" sowie den der Skala 12 zugeordneten Bezeichnungen "Tief" und "Hoch" ist für den Fahrzeugführer unmittelbar verständlich, daß er den Abstand zwischen Karosserie und Fahrbahn über eines der Bedienelemente manuell einstellen kann. Dabei ändert sich der Bodenabstand in der Fahrzeug-Grafik entsprechend der über das bzw. die Bedienelemente 3 (vgl. Fig. 1) vorgenommenen Einstellung. Zudem wird die Einstellung durch Aufleuchten des der Bezeichnung "Tief" bzw. "Hoch" zugeordneten Skalensegments angezeigt.

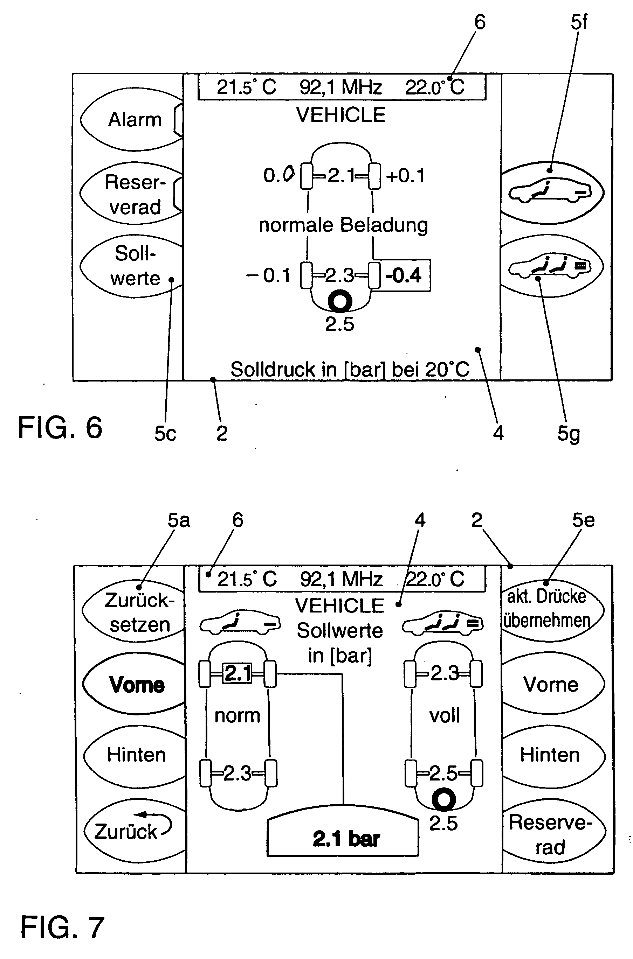

Des weiteren kann vorgesehen sein, daß mittels der multifunktionalen Anzeige- und Bedieneinrichtung 1 auch der Reifendruck in den Fahrzeugrädern selektiv einstellbar ist und die jeweilige Einstellung auf dem Displayfeld 2 angezeigt wird. So erscheint nach Anwahl des der Einstellung des Reifendrucks fest zugewiesenen Bedienelements 13 (vgl. Fig. 1) auf dem Displayfeld 2 das Grundmenü gemäß Fig. 6. Das Informations-Panel 4 zeigt hier eine Draufsicht auf ein schematisch dargestelltes Kraftfahrzeug mit dessen vier Rädern sowie dem Reserverad. Zwischen den Vorderrädern und den Hinterrädern ist der jeweilige Solldruck in bar bei 20°C Umgebungstemperatur und normaler Beladung angezeigt. Die Abweichung des jeweiligen Reifendrucks vom Sollwert ist auf dem Informations-Panel 4 jeweils neben dem Fahrzeugrad angezeigt. Es ist zu erkennen, daß der Reifendruck im vorderen linken Rad dem Solldruck von 2,1 bar entspricht, während der Reifendruck im rechten vorderen Rad 0,1 bar höher ist als der Solldruck von 2,1 bar. Übersteigt die Abweichung zwischen Soll- und Istdruck einen bestimmten kritischen Wert, so wird dies durch einen geeigneten Warnhinweis signalisiert. Ein solcher Warnhinweis kann beispielsweise in einer rot aufleuchtenden Unterlegung der angezeigten Druckabweichung bestehen, wie in Fig. 6 am rechten hinteren Rad durch die dunkelschattierte Hintergrundfläche dargestellt ist.

Will der Fahrer sich über die Sollwerte des Reifendrucks und die eventuelle Abweichung hiervon für den vollbeladenen Zustand des Fahrzeugs informieren, so betätigt er das Bedienelement 3g (vgl. Fig. 1), dem die Funktionsanzeige 5g zugeordnet ist. Will der Fahrer die Sollwerte für den Reifendruck verändern, so betätigt er in dem in Fig. 6 dargestellten Menü das der Funktionsanzeige 5c zugeordnete Bedienelement 3c (vgl. Fig. 1). Es erscheint dann das Menü gemäß Fig. 7. Dieses Menü stellt dem Benutzer verschiedene Funktionen zur Verfügung, um die Sollwerte für den Reifendruck neu einzustellen bzw. auf die Werkseinstellung zurückzustellen. Durch eine Preselect-Marke kann dabei zwischen "Vorne" (Normalbeladung), "Hinten" (Normalbeladung), "Vorne" (Vollbeladung), "Hinten" (Vollbeladung) und "Reserverad" gewechselt werden.

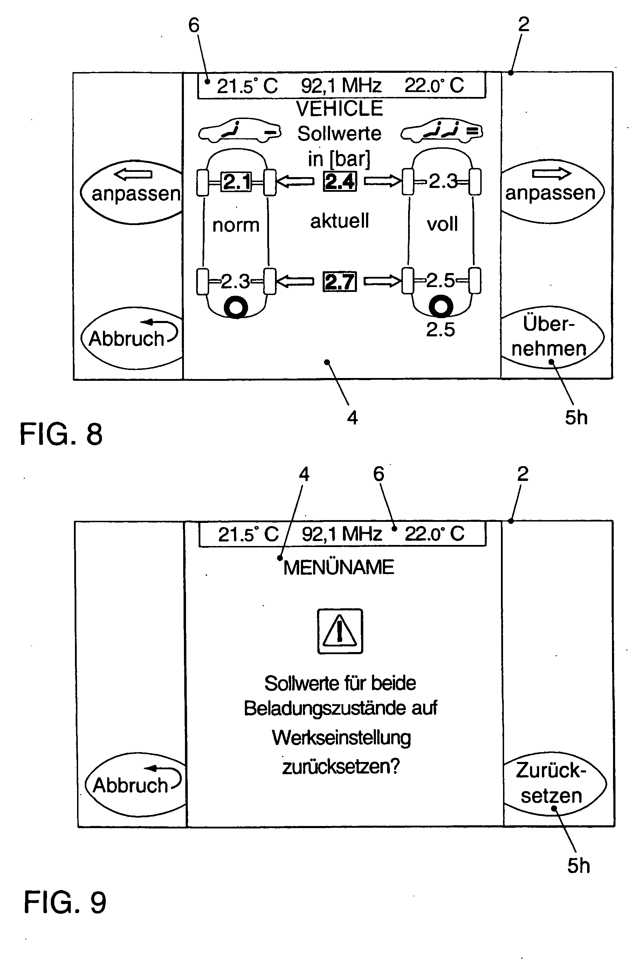

Will der Fahrer die aktuellen Drücke als Sollwerte übernehmen, so betätigt er das dem Anzeigefeld 5e zugeordnete Bedienelement 3e (vgl. Fig. 1). Es erscheint dann das Menü gemäß Fig. 8. In diesem Menü ist die Funktion des Bedienelements 3h, das dem Anzeigefeld 5h "Übernehmen" zugeordnet ist, solange außer Kraft gesetzt, bis ein Abgleich der Sollwerte mit den aktuellen Drücken stattgefunden hat. Zur Vornahme des Abgleichs wird das dem jeweiligen Beladungszustand zugeordnete Bedienelement 3b bzw. 3f, welches der Funktionsanzeige 5b bzw. 5f zugeordnet ist, betätigt. Will der Benutzer die aktuellen Drücke nicht als Sollwerte übernehmen, betätigt er das dem Anzeigefeld 5d zugeordnete Bedienelement 3d (vgl. Fig. 1). Er gelangt dann zu dem Menü gemäß Fig. 7 zurück. Will er zu dem Menü gemäß Fig. 6 zurückkehren, betätigt er im Menü gemäß Fig. 7 das dem Anzeigefeld 5d zugeordnete Bedienelement 3d. Durch Betätigen des dem Anzeigefeld 5a zugeordneten Bedienelements 3a gelangt der Benutzer vom Menü gemäß Fig. 7 in die Anzeige gemäß Fig. 9, die eine Sicherheitsabfrage darstellt. Sofern er die Sollwerte für die beiden Beladungszustände auf die Werkseinstellung zurücksetzen will, hat er das dem Anzeigefeld 5h zugeordnete Bedienelement 3h zu betätigen. Er gelangt dann in das Menü gemäß Fig. 6 zurück.

## Patentansprüche

1. System zur manuellen Einstellung der Dämpfung eines Kraftfahrzeug-Fahrwerkes, insbesondere eines Luftfedern aufweisenden Kraftfahrzeug-Fahrwerkes, welches eine multifunktionale Anzeige- und Bedieneinrichtung (1) mit einem Displayfeld (2) zur Anzeige von Informationen mindestens einer auszuwählenden und/oder einer ausgewählten Menü- und/oder Funktionszuweisung und mit Bedienelementen (3) zur Menü- und/oder Funktionsauswahl aufweist, **dadurch gekennzeichnet, dass** mit mindestens einem der Bedienelemente (3) die Dämpfung des Fahrwerkes auf vier unterschiedliche Dämpfungsmodi einstellbar ist und zumindest zwischen zwei vorgebbaren Dämpfungsmodi stufenlos einstellbar ist und der jeweilige Dämpfungsmodus auf dem Displayfeld (2) angezeigt wird oder anzeigbar ist.

2. System nach Anspruch 1, **dadurch gekennzeichnet, dass** die Dämpfung stufenweise einstellbar ist.

3. System nach einem der Ansprüche 1 oder 2, **dadurch gekennzeichnet, dass** die Dämpfereinstellung mittels einer Skala (8) und/oder einer piktogrammartigen Darstellung (9) auf dem Displayfeld (2) angezeigt wird oder anzeigbar ist.

4. System nach Anspruch 3, **dadurch gekennzeichnet, dass** bei der Anzeige der Dämpfereinstellung eine Standardeinstellung durch ein optisch hervorgehobenes Skalensegment (10) auf dem Displayfeld (2) markiert ist.

5. System nach einem der Ansprüche 1 bis 4, **dadurch gekennzeichnet, dass** mittels der multifunktionalen Anzeige- und Bedieneinrichtung (1) weitere Fahrwerkseigenschaften manuell einstellbar sind und die jeweilige Einstellung auf dem Displayfeld (2) angezeigt wird oder anzeigbar ist.

6. System nach einem der Ansprüche 1 bis 5, **dadurch gekennzeichnet, dass** mittels der multifunktionalen Anzeige- und Bedieneinrichtung (1) der Abstand zwischen Karosserie und Fahrbahn und/oder der Reifendruck einstellbar ist und die jeweilige Einstellung auf dem Displayfeld (2) angezeigt wird oder anzeigbar ist.

## Claims

1. System for the manual adjustment of the damping of a motor vehicle suspension, in particular a motor vehicle suspension comprising a pneumatic spring, and which comprises a multifunctional display and operating device (1) with a display field (2) for displaying information of at least one menu and/or function allocation which is to be selected and/or has been selected and with operating elements (3) for menu and/or function selection, **characterized in that**, with at least one of the operating elements (3), the damping of the suspension may be adjusted to four different damping modes and may be continuously adjusted at least between two predeterminable damping modes and the respective damping mode is displayed, or may be displayed, on the display field (2).

2. System according to Claim 1, **characterized in that** the damping may be adjusted in a stepped manner.

3. System according to one of Claims 1 or 2, **characterized in that** the damper adjustment is displayed, or may be displayed, by means of a scale (8) and/or a pictogram-like display (9) on the display field (2).

4. System according to Claim 3, **characterized in that**, when displaying the damper adjustment, a standard adjustment is highlighted by a visually enhanced scale segment (10) on the display field (2).

5. System according to one of Claims 1 to 4, **characterized in that**, by means of the multifunctional display and operating device (1), further suspension characteristics may be manually adjusted and the respective adjustment is displayed, or may be displayed, on the display field (2).

6. System .according to one of Claims 1 to 5, **characterized in that**, by means of the multifunctional display and operating device (1), the distance between the bodywork and the carriageway and/or the tyre pressure may be adjusted and the respective adjustment is displayed, or may be displayed, on the display field (2).

## Revendications

1. Système de réglage manuel de l'amortissement d'un châssis de roulement d'un véhicule automobile, notamment d'un châssis de roulement d'un véhicule automobile présentant des amortisseurs pneumatiques, lequel présente un dispositif multifonctions d'affichage et de commande (1) comprenant une zone d'affichage (2) pour afficher des informations d'au moins une affectation de menu et/ou de fonction à sélectionner et/ou sélectionnée et comprenant des éléments de commande (3) pour la sélection du menu et/ou de la fonction, **caractérisé en ce que** l'amortissement du châssis de roulement peut être réglé avec au moins l'un des éléments de commande (3) sur quatre modes d'amortissement différents et il est réglable graduellement entre au moins deux modes d'amortissement pouvant être prédéfinis et le mode d'amortissement correspondant est affiché ou peut être affiché sur la zone d'affichage (2).

2. Système selon la revendication 1, **caractérisé en ce que** l'amortissement est réglable par paliers.

3. Système selon l'une des revendications 1 ou 2, **caractérisé en ce que** le réglage de l'amortisseur est affiché ou peut être affiché sur la zone d'affichage (2) au moyen d'une graduation (8) et/ou d'une représentation sous forme de pictogramme (9).

4. Système selon la revendication 3, **caractérisé en ce que**, lors de l'affichage du réglage de l'amortisseur, un réglage standard est repéré par un segment de la graduation (10) mis en valeur visuellement sur la zone d'affichage (2).

5. Système selon l'une des revendications 1 à 4, **caractérisé en ce que** d'autres caractéristiques du châssis de roulement peuvent être réglées manuellement au moyen du dispositif multifonctions d'affichage et de commande (1) et le réglage correspondant est affiché ou peut être affiché sur la zone d'affichage (2).

6. Système selon l'une des revendications 1 à 5, **caractérisé en ce que** l'écart entre la carrosserie et la chaussée et/ou la pression des pneumatiques est réglable au moyen du dispositif multifonctions d'affichage et de commande (1) et le réglage correspondant est affiché ou peut être affiché sur la zone d'affichage (2).
